# EUROPEAN PATENT APPLICATION

(11) **EP 4 554 188 A1**
(43) Date of publication of application: **14.05.2025**
(21) Application number: 23910722.0
(22) Date of filing: 27.12.2023
(51) Int. Cl.: H04L 67/12

(54) **DETECTION METHOD, AND DEVICE**

(30) Priority: 30.12.2022 CN 202211723946
(71) Applicant: Huawei Technologies Co., Ltd., Shenzhen, Guangdong 518129 (CN)
(72) Inventor: DONG, Wei, Shenzhen, Guangdong 518129 (CN); XU, Haowei, Shenzhen, Guangdong 518129 (CN); HAO, Yi, Shenzhen, Guangdong 518129 (CN)
(74) Representative: Körber, Martin Hans
(86) International application number: PCT/CN2023/142348
(87) International publication number: WO 2024/140803

(57) **Abstract**

A detection method and a device are provided. The method includes: determining a detection mode corresponding to a first subspace, where the detection mode corresponding to the first subspace is related to whether the first subspace includes a detection area not covered by a sensing device; obtaining sensing information of the sensing device based on the determined detection mode corresponding to the first subspace; and determining a human body sensing detection result of the first subspace based on the sensing information of the sensing device. The method can improve a human body sensing capability.

## Description

### CROSS-REFERENCE TO RELATED APPLICATIONS

This application claims priority to Chinese Patent Application No. 202211723946.1, filed with the China National Intellectual Property Administration on December 30, 2022 and entitled "DETECTION METHOD AND DEVICE", which is incorporated herein by reference in its entirety.

### TECHNICAL FIELD

This application relates to the field of communication technologies, and in particular, to a detection method and a device.

### BACKGROUND

Using a house as a basis, whole-house intelligence uses integrated cabling, network communication, security protection, automatic control, and audio and video technologies to integrate facilities related to home life and build an efficient management system for residential facilities and family schedule affairs, thereby improving home security, convenience, comfort, and artistry, and achieving an environment-friendly and energy-saving living environment.

The whole-house intelligence can enable some smart scenarios based on human body sensing detection. The smart scenarios are smart scenarios in which one or more home devices are controlled based on a selection of a user or based on human body sensing detection sensed by a sensing device (for example, a sensor), for example, a light is turned on when a person arrives (for example, a light is automatically turned on when the sensing device detects that a person enters a room), or a defensive measure is automatically deployed (for example, an automatic alarm function to be performed when a smart lock is pried is enabled when the sensing device senses that a person leaves a room).

Currently, environmental data is collected mainly by using various sensors, to learn of human body sensing, and a corresponding smart scenario is enabled based on human body sensing. How to improve a human body sensing capability in a space based on sensing information of a sensing device on a human body, to enable a corresponding smart scenario is a problem that needs to be resolved currently.

An objective of this application is to provide a detection method and a device, to improve a human body sensing capability.

The foregoing objective and other objectives are achieved by using features in the independent claims. Further implementations are embodied in the dependent claims, the specification, and the accompanying drawings.

According to a first aspect, a detection method is provided. The method may be performed by an integrated sensing platform, and the method may include: determining a detection mode corresponding to a first subspace, where the detection mode corresponding to the first subspace is related to whether the first subspace includes a detection area not covered by a sensing device; obtaining sensing information of the sensing device based on the determined detection mode corresponding to the first subspace; and determining a human body sensing detection result of the first subspace based on the sensing information of the sensing device.

In the foregoing implementation, the detection mode corresponding to the first subspace is related to whether the first subspace includes a detection area not covered by a sensing device. It may be understood that whether the first subspace includes a detection area not covered by a sensing device is related to installation information (for example, a quantity and a position) of a sensing device deployed in a space in which the first subspace is located and a layout of subspaces in the space, that is, the detection mode corresponding to the subspace may be set based on the installation information of the sensing device deployed in the space and the layout of the subspaces in the space. In this way, because coverage of sensing devices in different subspaces is different, different subspaces may correspond to different detection modes. Therefore, based on the foregoing difference between different subspaces, detection modes matching the subspaces may be used to perform human body sensing detection, thereby improving a human body sensing capability in the space.

In a possible implementation, the human body sensing detection result of the first subspace is: a person exists in the first subspace, or no person exists in the first subspace.

The foregoing implementation may be applied to human body existence detection, so that accuracy of human body existence detection may be improved.

In a possible implementation, the first subspace includes one sensing device, a detection area in the first subspace is fully covered by the one sensing device, and the detection mode corresponding to the first subspace is a first detection mode; and the obtaining sensing information of the sensing device based on the determined detection mode corresponding to the first subspace includes:
obtaining sensing information of the one sensing device in the first subspace based on the determined first detection mode.

In the foregoing implementation, if one sensing device exists in the first subspace and the sensing device may cover the detection area in the subspace, a human body sensing detection result of the subspace may be determined only based on sensing information of the sensing device in the subspace. Algorithm logic of the first detection mode is simple, and detection accuracy can be ensured.

In a possible implementation, the first subspace includes a plurality of sensing devices, a detection area in the first subspace is fully covered by the plurality of sensing devices, and the detection mode corresponding to the first subspace is a second detection mode; and the obtaining sensing information of the sensing device based on the determined detection mode corresponding to the first subspace includes: obtaining sensing information of the plurality of sensing devices in the first subspace based on the determined second detection mode.

In the foregoing implementation, if a plurality of sensing devices exist in the first subspace and the plurality of sensing devices may cover the detection area in the subspace, a human body sensing detection result of the subspace may be determined only based on sensing information of the plurality of sensing devices in the subspace. Algorithm logic of the second detection mode is simple, and detection accuracy can be ensured.

In a possible implementation, the determining a human body sensing detection result of the first subspace based on the sensing information of the sensing device includes: if it is determined, based on sensing information of any one of the plurality of sensing devices in the first subspace, that a person exists, determining that a person exists in the first subspace.

Considering that confidence of person existence sensed by a sensing device is generally high and there is generally no misjudgment, as long as any sensing device senses existence of a person, it may be determined that a person exists in the first subspace. Algorithm logic is simple, and detection accuracy can be ensured.

In a possible implementation, the determining a human body sensing detection result of the first subspace based on the sensing information of the sensing device includes: if none of the plurality of sensing devices in the first subspace senses existence of a person, determining, based on sensing information of each sensing device and detection result confidence of person nonexistence corresponding to each sensing device, whether no person exists in the first subspace.

Considering that confidence of person nonexistence sensed by a sensing device may not be high and there may be a misjudgment, determining is performed based on the detection result confidence of person nonexistence, so that detection accuracy can be improved.

In a possible implementation, the first subspace does not include a sensing device, and the detection mode corresponding to the first subspace is a third detection mode; and the obtaining sensing information of the sensing device based on the determined detection mode corresponding to the first subspace includes: obtaining sensing information of a sensing device in a second subspace and historical data of a human body sensing detection result of the second subspace based on the determined third detection mode, where the second subspace includes one or more subspaces that communicate with the first subspace.

If no sensing device exists in the first subspace, a detection area in the first subspace cannot be detected. In the foregoing implementation, for this case, inference is performed based on the sensing information of the sensing device in the second subspace that communicates with the first subspace and the historical data of the detection result, to determine the detection result of the first subspace, thereby ensuring detection accuracy.

In a possible implementation, the determining a human body sensing detection result of the first subspace based on the sensing information of the sensing device includes: determining, based on the sensing information of the sensing device in the second subspace, the historical data of the human body sensing detection result of the second subspace, and a communication relationship between the first subspace and the second subspace, whether a person exists in the first subspace.

In a possible implementation, the first subspace includes one or more sensing devices, a detection area in the first subspace is not fully covered by the one or more sensing devices, and the detection mode corresponding to the first subspace is a third detection mode; and the obtaining sensing information of the sensing device based on the determined detection mode corresponding to the first subspace includes: obtaining sensing information of the one or more sensing devices in the first subspace, sensing information of a sensing device in a second subspace, and historical data of human body sensing detection results of the first subspace and the second subspace based on the determined third detection mode, where the second subspace includes one or more subspaces that communicate with the first subspace.

If one or more sensing devices exist in the first subspace, but the one or more sensing devices cannot fully cover the detection area in the subspace, that is, an area that cannot be detected exists in the first subspace, in this case, if detection is performed only based on the sensing information of the sensing device in the first subspace, a detection result may be inaccurate. In the foregoing implementation, inference is performed based on the sensing information of the sensing devices in the first subspace and the second subspace (that is, a subspace that communicates with the first subspace) and the historical data of the detection results of the first subspace and the second subspace, to determine the detection result of the first subspace, thereby ensuring detection accuracy.

In a possible implementation, the determining a human body sensing detection result of the first subspace based on the sensing information of the sensing device includes: determining, based on the sensing information of the sensing devices in the first subspace and the second subspace, the historical data of the human body sensing detection results of the first subspace and the second subspace, and a communication relationship between the first subspace and the second subspace, whether a person exists in the first subspace.

In a possible implementation, after the determining a human body sensing detection result of the first subspace based on the sensing information of the sensing device, the method further includes: determining a human body sensing detection result of a first space based on human body sensing detection results of at least two subspaces in the first space, where the at least two subspaces in the first space include the first subspace.

In the foregoing implementation, a human body sensing detection result of a subspace level and a human body sensing detection result of a space level may be obtained, that is, human body sensing detection results of different granularities may be obtained. When human body sensing detection results of different granularities are applied to a smart scenario, human body sensing detection results of different granularities may be provided for each subsystem in the smart scenario, so that each subsystem uses a human body sensing detection result of a corresponding granularity as required, thereby improving a control effect or control precision of each subsystem.

In a possible implementation, the method further includes: when a triggering event is obtained, starting a sensing device in the first space. Optionally, the triggering event includes at least one of a door opening event and a door closing event.

In a possible implementation, before the determining a detection mode corresponding to a first subspace, the method further includes: setting, based on a layout of at least two subspaces in the first space and installation information of the sensing device in the first space, the detection mode corresponding to the first subspace, where the at least two subspaces in the first space include the first subspace; and the determining a detection mode corresponding to a first subspace includes: obtaining the set detection mode corresponding to the first subspace.

Optionally, the installation information of the sensing device includes one or more of the following: an installation position of the sensing device, a quantity of the sensing device, a type of the sensing device, and a sensing range of the sensing device.

In the foregoing implementation, because the detection mode is related to the layout of the at least two subspaces in the first space and the installation information of the sensing device in the first space, whether a detection area in the first subspace (for example, the first subspace) can be fully covered by the sensing device may be determined based on the layout of the at least two subspaces in the first space and the installation information of the sensing device in the first space, and a detection mode corresponding to the subspace may be determined. In the foregoing implementation, the detection mode of the subspace may be formulated with reference to a spatial position relationship and the installation information (for example, an installation position) of the sensing device, so that accuracy of human body sensing detection performed on the subspace may be improved.

According to a second aspect, a device is provided. The device includes a processing unit and a transceiver unit. The transceiver unit is configured to obtain sensing information of a sensing device, where the sensing information of the sensing device is cached. The processing unit is configured to: obtain a detection mode corresponding to a first subspace, where the detection mode corresponding to the first subspace is related to whether the first subspace includes a detection area not covered by the sensing device; obtain the cached sensing information of the sensing device based on the detection mode corresponding to the first subspace; and determine a human body sensing detection result of the first subspace based on the sensing information of the sensing device.

According to a third aspect, a device is provided. The device includes one or more processors and one or more memories. The one or more memories store one or more programs, and when the program is executed by the one or more processors, the device is enabled to perform the method according to any section of the first aspect.

According to a fourth aspect, a chip system is provided. The chip system includes a processor and a memory, and the processor is configured to read and execute a program stored in the memory, to implement the method according to any section of the first aspect.

According to a fifth aspect, a readable storage medium is provided. The readable storage medium includes a program, and when the program is run on a device, the device is enabled to perform the method according to any section of the first aspect.

According to a sixth aspect, a program product is provided. When the program product is run on a device, the device is enabled to perform the method according to any section of the first aspect.

For beneficial effects of the second aspect to the sixth aspect, refer to the beneficial effects of the first aspect. Details are not described again.

### BRIEF DESCRIPTION OF DRAWINGS

FIG. 1 is a diagram of a whole-house intelligence scenario to which an embodiment of this application is applicable;
FIG. 2 is a diagram of a software system architecture of an integrated sensing platform according to an embodiment of this application;
FIG. 3 is a diagram of a whole-house type and a sensing device disposed in each room according to an embodiment of this application;
FIG. 4 is a diagram used to describe topology information of a device and a space according to an embodiment of this application;
FIG. 5 is a diagram of a data structure of a sensing database according to an embodiment of this application;
FIG. 6 is a diagram of detection result confidence of person nonexistence and detection result confidence of person existence that are corresponding to a sensing device in a subspace according to an embodiment of this application;
FIG. 7 is a diagram of a hardware system architecture of an integrated sensing platform according to an embodiment of this application;
FIG. 8 is a schematic flowchart of a detection method according to an embodiment of this application;
FIG. 9A and FIG. 9B are a schematic flowchart of another detection method according to an embodiment of this application; and
FIG. 10 is a diagram of a structure of a device according to an embodiment of this application.

### DESCRIPTION OF EMBODIMENTS

Whole-house intelligence needs to enable some smart scenarios based on human body sensing. To enable a smart scenario, various sensing devices (for example, including sensors) are usually required to collect environmental data to learn of human body sensing. The environmental data is presented in a device-centric form. However, enabling of a smart scenario generally requires space-centric information. For example, to enable some smart scenarios, it is necessary to know whether a person exists in a room, instead of whether a sensor senses existence of a person.

Therefore, a relationship between a sensing device and a space needs to be understood, and human body sensing detection in the space needs to be performed based on the relationship between the sensing device and the space, to improve a human body sensing capability, and improve human body sensing accuracy. For example, when a plurality of sensors of a same type are deployed in a space, or different types of sensors cover a same space, it is particularly important to compensate for shortcomings of the sensors based on a relationship between the sensors and the space (for example, sensing ranges of the sensors may be different due to a limitation of a sensor type, an installation position, or the like, and consequently, an area that cannot be sensed may exist), to enhance the human body sensing capability and accuracy.

Therefore, embodiments of this application provide a detection method and a related device that can implement the method. Embodiments of this application may be applied to a whole-house intelligence scenario. In embodiments of this application, when human body sensing detection is performed on a space, determining may be performed based on a relationship between a sensing device and the space (for example, whether the space includes a detection area not covered by the sensing device), so that a human body sensing capability in the space may be improved.

One space may include a plurality of subspaces. For example, if a residence (whole house) is considered as one space, the residence generally includes a plurality of rooms, and each room may be considered as one subspace. In some embodiments of this application, on the basis of performing human body sensing detection on each subspace in the foregoing manner, a human body sensing detection result of the entire space may be further determined based on a human body sensing detection result of each subspace. Still using the residence as an example, in the foregoing manner, sensing information of all sensing devices in the whole house may be integrated, and a space-centric human body sensing detection result may be comprehensively determined for use in a smart scenario. In the foregoing implementation, a human body sensing detection result of a subspace (for example, a single room) granularity and a human body sensing detection result of an entire space (for example, the whole house) granularity may be obtained, so that a human body sensing detection result of a corresponding granularity may be used based on different requirements of the smart scenario.

The human body sensing detection in embodiments of this application may include human body existence detection, that is, detecting whether a person exists or no person exists in a space; or may include detection on a status and/or behavior of a human body, or include other detection related to a human body. This is not limited in embodiments of this application.

The following describes embodiments of this application in detail with reference to accompanying drawings.

Terms used in the following embodiments are merely intended to describe specific embodiments, but are not intended to limit this application. The terms "one", "a", "the", "the foregoing", and "this" of singular forms used in this specification and the appended claims of this application are also intended to include expressions such as "one or more", unless otherwise specified in the context clearly. It should be further understood that, in embodiments of this application, "one or more" means one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

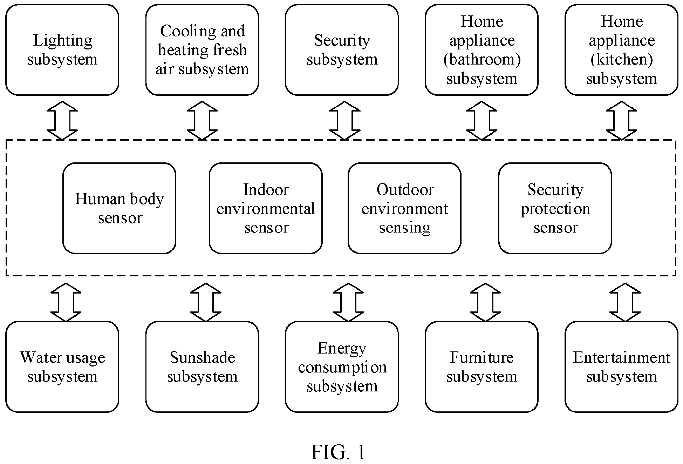

FIG. 1 is a diagram of a whole-house intelligence scenario to which an embodiment of this application is applicable. As shown in FIG. 1, the whole-house intelligence scenario includes ten subsystems, which are respectively:
Lighting subsystem: includes devices such as a smart spotlight, a smart strip light, and a smart switch; and may provide an appropriate space lighting effect based on visual and controllable capabilities of lamps.

Cooling and heating fresh air subsystem: includes devices such as a purifier, an air conditioner, and a floor heating device; and may focus on health and energy saving, and coordinate capabilities of various devices to achieve visual and controllable air quality.

Security subsystem: includes devices such as a smart door and a smart window; and may provide comprehensive, precise, easy-to-use, and privacy-protective security control based on distributed coordination of a plurality of devices.

Home appliance (bathroom) subsystem: includes a water heater, a smart toilet, and the like; and may provide comfortable, healthy, and clean experience in a bathroom scenario.

Home appliance (kitchen) subsystem: includes devices such as a gas stove and an oven; and may provide healthy and portable kitchen use experience.

Water usage subsystem: includes devices such as a water dispenser and a water purifier; and may provide visual, controllable, maintainable, and interactive water usage experience.

Sunshade subsystem: includes devices such as a motor for controlling a curtain; and may meet a requirement of intelligent sunshade control.

Energy consumption subsystem: includes devices such as a photovoltaic panel; and may be visual and controllable for a device with high energy consumption.

Furniture subsystem: includes devices such as a smart bed; and may provide portable and rich furniture, and support scenarization of whole-house intelligence.

Entertainment subsystem: includes devices such as a smart speaker; and may improve portable and customized audio and video entertainment experience in a whole house.

The lighting subsystem, the cooling and heating fresh air subsystem, the security subsystem, the home appliance (bathroom) subsystem, the home appliance (kitchen) subsystem, the sunshade subsystem, the furniture subsystem, and the entertainment subsystem may enable a smart scenario or control a device based on sensing information of a human body sensor. For example, the human body sensor may include an infrared human body movement sensor, a millimeter wave sensor (millimeter wave radar), a Wi-Fi CSI (CSI is short for channel state information, that is, channel state information) sensor, or the like.

The lighting subsystem, the cooling and heating fresh air subsystem, and the water usage subsystem may enable a smart scenario or control a device based on sensing information of indoor and outdoor environmental sensors. For example, the indoor and outdoor environmental sensors may include a temperature and humidity sensor, an air quality sensor, a light sensor, or the like.

The cooling and heating fresh air subsystem and the sunshade subsystem may further enable a smart scenario or control a device based on outdoor environment sensing information. For example, the outdoor environment sensing information may come from a wind, rain, and snow sensor, or may come from weather forecast information on a network side.

The security subsystem may further enable a smart scenario or control a device based on sensing information of a security protection sensor. For example, the security protection sensor may include a camera, a smart doorbell, a smoke sensor, or the like.

It may be understood that the subsystems in the whole-house intelligence scenario shown in FIG. 1 are merely an example. In actual application, more or fewer subsystems may be included, or a subsystem different from the foregoing subsystems may be included. This is not limited in this embodiment of this application.

An embodiment of this application provides an integrated sensing platform. Sensing information of each sensing device may be input into the integrated sensing platform as input data. The integrated sensing platform may determine a human body sensing detection result based on the input data and a relationship between the sensing device and a space, and output the human body sensing detection result for use by subsystems (for example, the subsystems in FIG. 1) in whole-house intelligence. For example, a subsystem in the whole-house intelligence may enable a corresponding smart scenario or control a device based on the human body sensing detection result output by the integrated sensing platform.

In this embodiment of this application, the sensing information of the sensing device is used to indicate a human body sensing detection result of the sensing device. Using human body existence detection as an example, the sensing information of the sensing device is used to indicate whether the sensing device detects (or senses) existence of a person. The sensing information may be reported by the sensing device to the integrated sensing platform, or may be determined by the integrated sensing platform based on information reported by the sensing device (for example, detection data reported by a sensing device of a sensor type, or event information reported by a sensing device of a smart home device type).

It may be understood that a naming manner of the integrated sensing platform is not limited in this embodiment of this application. For example, the integrated sensing platform may also be referred to as a human body sensing detection platform, a human body sensing detection system, a detection system, or the like.

It may be understood that an implementation of the integrated sensing platform is not limited in this embodiment of this application. The integrated sensing platform may be implemented by using software, may be implemented by using hardware, or may be implemented by using a combination of software and hardware.

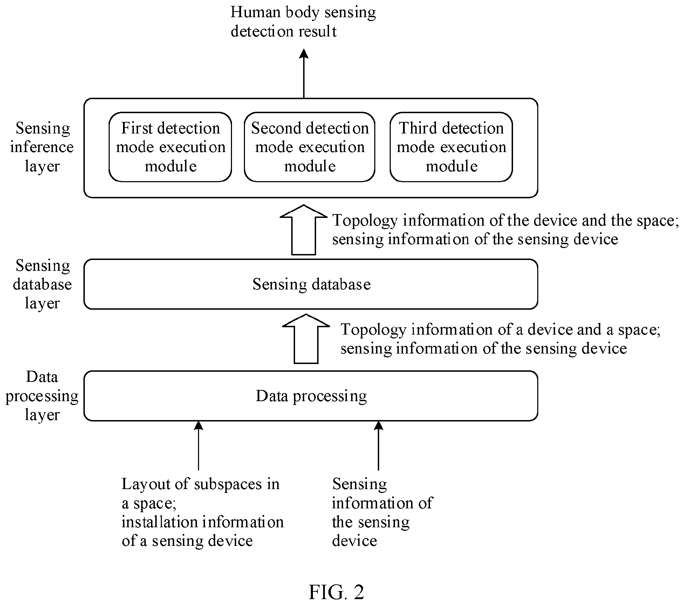

FIG. 2 is a diagram of a software system architecture of an integrated sensing platform according to an embodiment of this application. As shown in FIG. 2, the software system architecture of the integrated sensing platform may include three layers, including a data processing layer, a sensing database layer, and a sensing inference layer in an order from low to high.

The data processing layer in the software system architecture of the integrated sensing platform is configured to process input data. For example, the data processing layer may generate topology information of a device and a space based on a layout (for example, an electronic map of a whole house) of subspaces in the space and installation information of a sensing device, and provide the topology information of the device and the space for the sensing database layer, to be stored in a sensing database. Optionally, the topology information of the device and the space may alternatively be directly provided for the sensing inference layer, so that when performing human body sensing detection on a subspace, the sensing inference layer determines, based on the topology information of the device and the space, a detection mode that needs to be used. The topology information of the device and the space is used to describe a spatial structure and distribution (or a layout) of the sensing device in the spatial structure. Further, the topology information of the device and the space may further include other information of the sensing device (for example, including information such as a type of the sensing device and a sensing range of the sensing device).

The sensing device may include a sensor, a video capture device (for example, a camera), a router, and the like, and may further include some devices that can communicate with the integrated sensing platform, for example, a device that can report information such as event information and a device status (for example, a smart home device, such as a smart doorbell, a smart door lock, a smart switch, or a smart panel). The type of the sensing device is not limited in this embodiment of this application.

When the sensing device is deployed, for example, a smart door lock or a door status sensor may be disposed, a human body movement sensor may be disposed in a main activity area of a family member, and a human body existence sensor (for example, including a millimeter wave sensor or a Wi-Fi CSI sensor) may be disposed in a human body rest area such as a sofa or a bed. Further, other smart devices (for example, including a smart air purifier, a smart switch, a smart panel, and a smart water heater) may be used as sensing devices to access the integrated sensing platform, so that sensing information (for example, event information) of these sensing devices is input into the integrated sensing platform as a basis for human body sensing detection.

The installation information of the sensing device may be obtained based on a deployment situation of the sensing device. The installation information of the sensing device may include: description information of the sensing device (for example, including a name, an identifier, and a model of the sensing device), an installation position of the sensing device (for example, a room in which the sensing device is installed, and a position at which the sensing device is installed in the room), the type or a purpose of the sensing device, the sensing range of the sensing device, and a quantity of the sensing device. A sensing range of a sensing device may vary according to a type or a purpose of the sensing device. For example, for a camera, a sensing range of the camera is an image capture range of the camera. For another example, for a millimeter wave sensor, a sensing range of the millimeter wave sensor is a signal coverage range of the millimeter wave sensor. For another example, for a router, a sensing range of the router is a signal coverage range of the router. For another example, for a human body existence sensor disposed on a bed, a sensing range of the human body existence sensor is an area in which the bed is located.

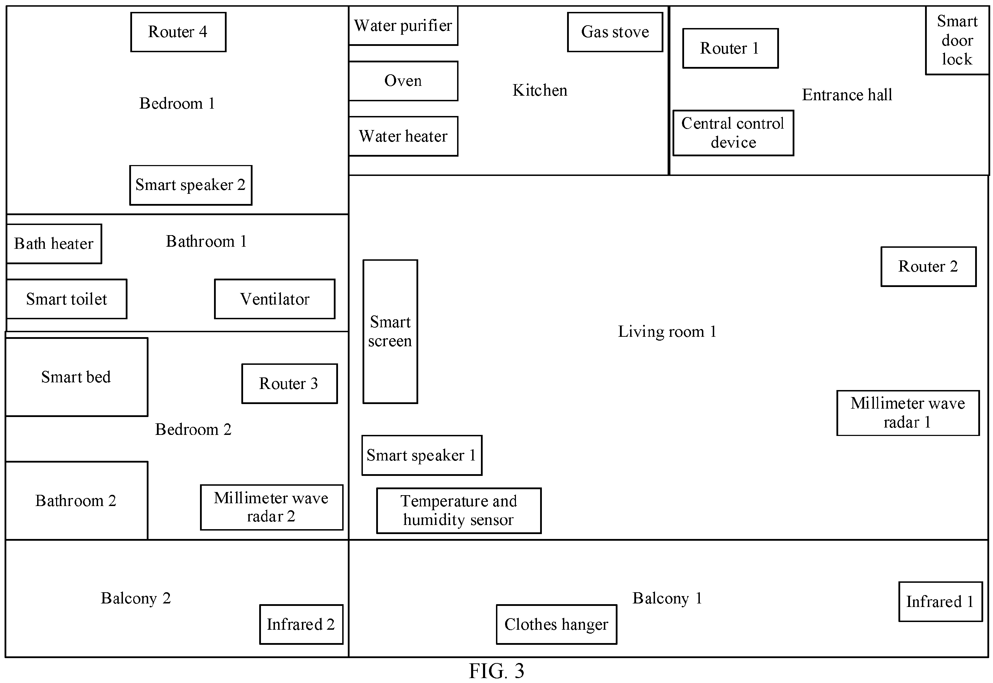

The following uses an electronic map of a whole house and an installation of a sensing device that are shown in FIG. 3 as an example to describe how to generate topology information of a device and a space.

As shown in FIG. 3, the diagram shows a whole-house type, including sizes of and a position relationship between rooms, and further shows a sensing device disposed in each room, including a type, an installation position, and the like of the sensing device. Devices such as a millimeter wave radar and a temperature and humidity sensor may report detection data to the integrated sensing platform, and devices such as a smart door lock, a water purifier, and a smart bed may report event information to the integrated sensing platform.

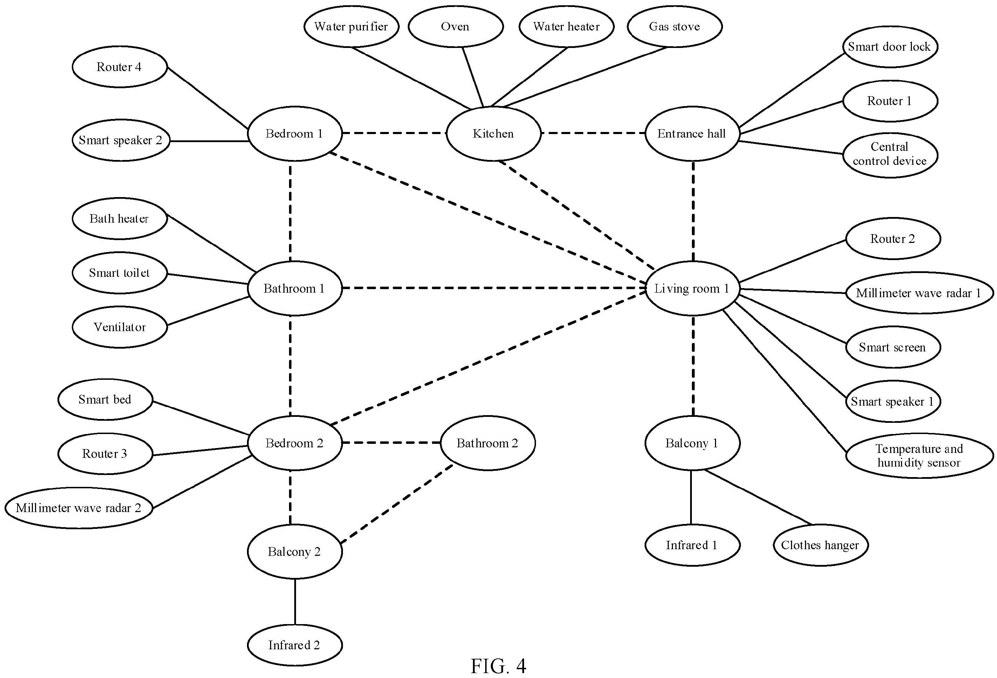

Based on the house type and the installation of the sensing device that are shown in FIG. 3, a topology diagram shown in FIG. 4 may be obtained, and is used to describe topology information of a device and a space. A dashed line between rooms in the figure indicates that a communication relationship exists between the rooms. It may be understood that, in the integrated sensing platform, the topology diagram shown in FIG. 4 may be described by using a data structure. "Infrared" in FIG. 3 and FIG. 4 represents an infrared human body movement sensor.

A process of determining the topology information of the device and the space based on the house type and the installation of the sensing device that are shown in FIG. 3 may be referred to as a spatial modeling process of sensing data. In this process, an electronic map of a home of a user, an installation position of a sensor, and a placement position of a smart device (for example, a smart speaker, a smart screen, or a switch panel) are used, and a spatial dependency relationship may be further used, to perform spatial modeling of sensing data. An example of a spatial modeling result of sensing data is shown in FIG. 4.

A capability of spatializing the sensing data may automatically generate a subspace (room) communication diagram and a relationship diagram (for example, as shown in FIG. 4) between a subspace (room) and a mounted device based on a house attribute of the sensing device (for example, whether the sensing device is used in a living room or a kitchen) and with reference to a floor plan. The installation information of the sensing device is mapped to the topology information of the device and the space, and the topology relationship of the device and the space is provided for the sensing inference layer, to serve an algorithm of the integrated sensing platform.

The sensing database layer in the software system architecture of the integrated sensing platform includes the sensing database, and the sensing database may store sensing information of a sensing device. In the sensing database, the sensing information may be stored in a chronological order based on a communication relationship (or a position relationship) between subspaces (for example, rooms) and a dependency relationship between a sensing device and each subspace (for example, which sensing devices are disposed in a room).

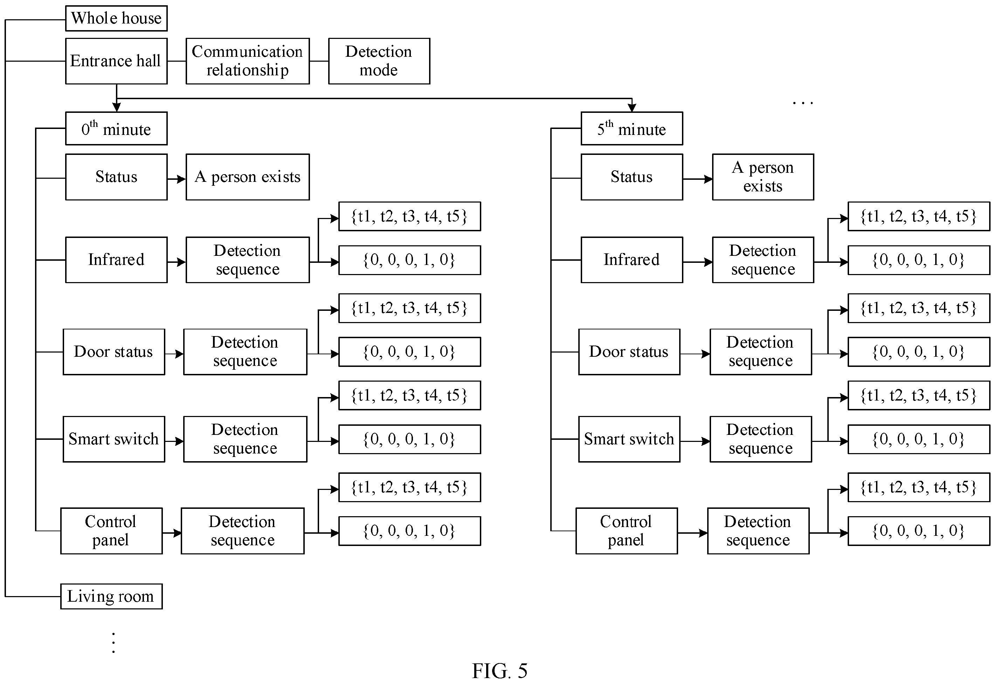

FIG. 5 shows an example of a data structure of a sensing database according to an embodiment of this application. As shown in FIG. 5, a plurality of time series data tables are created by using an entire home domain (a whole house) as a root node and a room as a child node. A detection sequence (for example, including reported sensing data or a reported event) and a reporting time that are corresponding to each sensing device are stored based on a fixed time granularity, and an operation result of the integrated sensing platform is stored in a same format (event + time). For example, in FIG. 5, an infrared human body movement sensor (represented as "infrared" in the figure), a door status sensor (represented as "door status" in the figure), a smart switch, and a temperature and scenario combination control panel (represented as "control panel" in the figure) are disposed in an entrance hall. In a detection cycle (from the 0^{th} minute to the 5^{th} minute), a detection sequence corresponding to the infrared human body movement sensor includes an event sequence {0, 0, 0, 1, 0} and a time sequence {t1, t2, t3, t4, t5}, a detection sequence corresponding to the door status sensor includes an event sequence {0, 0, 0, 1, 0} and a time sequence {t1, t2, t3, t4, t5}, and a detection sequence corresponding to the smart switch includes an event sequence {0, 0, 0, 1, 0} and a time sequence {t1, t2, t3, t4, t5}. Herein, "1" indicates that existence of a person is detected, and 0 indicates that nonexistence of a person is detected. Based on detection results of these sensing devices, it may be determined that a person exists in the entrance hall in the time period, and the detection results may be recorded in a "status" field in the database.

Optionally, 0 or 1 in the detection sequence may be reported by the sensing device. For example, the infrared human body movement sensor is used as an example. When detecting that a person moves, the infrared human body movement sensor may report "1" to indicate that existence of a person is detected. For another example, the door status sensor is used as an example. After detecting a door opening event, the door status sensor determines, based on the event, that a person exists, and then reports "1". Alternatively, 0 or 1 in the detection sequence may be determined by the integrated sensing platform based on detection data or event information reported by the sensing device. For example, the temperature and scenario combination control panel is used as an example. After a user operates the control panel, the control panel reports corresponding operation information or event information to the integrated sensing platform based on an operation of the user. The integrated sensing platform determines a human body existence detection result (represented by 1 or 0) based on the received operation information or event information, and records the human body existence detection result in a detection sequence corresponding to the control panel.

Optionally, the sensing database may further store communication relationship information of the subspaces. For example, in FIG. 5, corresponding to the subspace "entrance hall", information about another subspace that has a communication relationship with the entrance hall may be stored in a "communication relationship" field. Optionally, the sensing database may further store detection mode information corresponding to the subspaces.

Optionally, the data structure of the sensing database may be designed with reference to the topology information of the device and the space provided by the data processing layer.

It may be understood that the data structure of the sensing database shown in FIG. 5 is merely a possible example. The data structure of the database is not limited in this embodiment of this application.

The sensing inference layer in the software system architecture of the integrated sensing platform is configured to determine a human body sensing detection result based on sensing information of a sensing device and a relationship between the sensing device and a space, and may further output the human body sensing detection result. The sensing information and the relationship between the sensing device and the space may come from the sensing database layer.

In a possible implementation, the sensing inference layer may include a first detection mode execution module, a second detection mode execution module, and a third detection mode execution module. The first detection mode execution module is configured to execute a first detection mode, the second detection mode execution module is configured to execute a second detection mode, and the third detection mode execution module is configured to execute a third detection mode.

The integrated sensing platform may determine, based on the topology information of the device and the space, a detection mode corresponding to each subspace (for example, each room). When determining a human body sensing detection result corresponding to a subspace (for example, a room), the integrated sensing platform may invoke, based on a detection mode corresponding to the subspace, a corresponding module to execute the corresponding detection mode, to determine the human body sensing detection result corresponding to the subspace. Optionally, after determining the detection mode corresponding to each subspace, the integrated sensing platform may store the information. Subsequently, after the topology information of the device and the space changes, the detection mode corresponding to each subspace may be re-determined based on updated topology information of the device and the space.

The first detection mode is also referred to as a single-device (or single-rule) detection method based on rule matching, and mainly supports some basic functions of integrated sensing, that is, implements capability reporting of a single sensing device. The integrated sensing platform determines, based on the topology information of the device and the space from the sensing database layer, that only one sensing device (for example, a temperature sensor or an infrared human body movement sensor) is disposed in a subspace (for example, a room), and the sensing device may cover a detection area in the subspace. In this case, the integrated sensing platform may determine that a detection mode corresponding to the subspace is the first detection mode.

For example, the electronic map of the whole house and the installation of the sensing device that are shown in FIG. 3 are used as an example. Only one infrared human body movement sensor is disposed on a balcony 2, and a sensing range of the sensor may cover a detection area of the balcony 2. Therefore, the integrated sensing platform may determine, for the balcony 2, that a detection mode corresponding to the balcony 2 is the first detection mode.

When the first detection mode is executed for a subspace (for example, a first subspace), a human body sensing detection result of the first subspace may be determined based on sensing information of a sensing device in the first subspace. For example, human body existence detection is used as an example. Based on a local operation event (for example, an operation of triggering a switch panel by a user, or an event of connecting a mobile phone to a router) of a smart home device in a room or a person existence event reported by a sensor, it may be directly determined that a person exists in the room.

Human body existence detection performed on the balcony 2 in FIG. 3 is used as an example. If information reported by the infrared human body movement sensor on the balcony 2 indicates that a person moves in the subspace (that is, equivalent to person existence), the integrated sensing platform determines that a person exists on the balcony 2. If information reported by the sensor indicates that no person moves (that is, equivalent to person nonexistence), the integrated sensing platform determines that no person exists on the balcony 2.

It may be understood that a detection area in a subspace may be an entire area of the subspace, or may be a partial area of the subspace. Using human body existence detection as an example, an area in which a person may exist in a subspace may be only a partial area (for example, a space within 2 meters from a ground) of the subspace. Therefore, an area in which a human body may exist in a subspace may be set as a detection area.

The second detection mode is also referred to as a multi-device detection algorithm based on prior knowledge. The integrated sensing platform determines, based on the topology information of the device and the space from the sensing database layer, that a plurality of (two or more) sensing devices are disposed in a subspace (for example, a room), and each sensing device cannot independently cover all detection areas in the subspace, but the plurality of sensing devices may cover the detection areas in the subspace. In this case, the integrated sensing platform may determine that a detection mode corresponding to the subspace is the second detection mode. The second detection mode is mainly applied to a case in which when a single sensing device cannot cover an entire detection area in a subspace (for example, a room) in which the sensing device is located, a plurality of sensing devices are disposed to cover the entire detection area in the subspace. In this case, sensing capabilities of the plurality of sensing devices may be integrated, to determine a human body sensing detection result of the subspace.

For example, the electronic map of the whole house and the installation of the sensing device that are shown in FIG. 3 are used as an example. A smart bed, a millimeter wave radar 2, and a router 3 are disposed in a bedroom 2, and each sensing device cannot independently cover a detection area of the bedroom 2, but sensing ranges of the three devices may cover an entire detection area of the bedroom 2. Therefore, the integrated sensing platform may determine, for the bedroom 2, that a detection mode corresponding to the bedroom 2 is the second detection mode.

When the second detection mode is executed for a subspace (for example, the first subspace, specifically the bedroom 2 in FIG. 3), a human body sensing detection result of the first subspace may be determined by integrating sensing information of a plurality of sensing devices in the first subspace. Using human body existence detection as an example, in a possible implementation, if the integrated sensing platform determines, based on sensing information of any one of the plurality of sensing devices in the first subspace, that a person exists, the integrated sensing platform determines that a person exists in the first subspace. Human body existence detection performed on the bedroom 2 in FIG. 3 is used as an example. If information reported by the smart bed in the bedroom 2 indicates that a person exists on the bed, the integrated sensing platform may determine that a person exists in the bedroom 2. If all the plurality of sensing devices in the first subspace sense that no person exists, the integrated sensing platform may determine that no person exists in the first subspace.

Still using human body existence detection as an example, in another possible implementation, if none of the plurality of sensing devices in the first subspace senses existence of a person, the integrated sensing platform may determine, based on sensing information of each sensing device in the first subspace and detection result confidence of person nonexistence corresponding to each sensing device, whether no person exists in the first subspace.

Optionally, the integrated sensing platform may set detection result confidence of person nonexistence corresponding to a sensing device.

Optionally, detection result confidence of person nonexistence corresponding to a sensing device may be determined based on topology information of a device and a space that is obtained by abstracting the electronic map of the whole house (a floor plan of the whole house) and installation information of the sensing device. Optionally, a value of detection result confidence of person nonexistence of a sensing device is mainly determined by comprehensively considering a coverage ratio of a sensing range of the sensing device to a detection area in a subspace (room) in which the sensing device is located, and sensing precision of the sensing device. Certainly, detection result confidence of person existence may also be set for a sensing device. Considering that a sensing device generally does not falsely report a detection result of person existence, detection result confidence of person existence corresponding to a sensing device is usually set to 1.

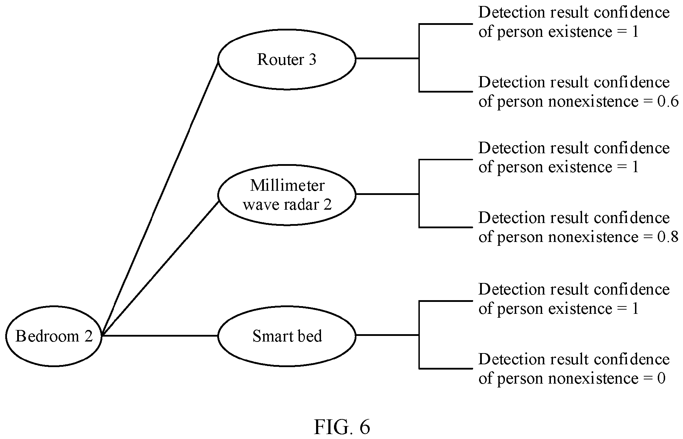

For example, for the smart bed, the millimeter wave radar 2, and the router 3 that are disposed in the bedroom 2 shown in FIG. 3, because coverage ratios of the sensing devices to the detection area of the bedroom 2 are different, detection result confidence of person nonexistence corresponding to the three sensing devices is also different. For example, as shown in FIG. 6, coverage ratios of coverage ranges of the sensing devices to the detection area of the bedroom 2 are arranged in descending order as follows: the millimeter wave radar 2, the router 3, and the smart bed. Therefore, with reference to sensing precision of the sensing devices, detection result confidence of person nonexistence corresponding to the millimeter wave radar 2 is set to 0.8, detection result confidence of person nonexistence corresponding to the router 3 is set to 0.6, and detection result confidence of person nonexistence corresponding to the smart bed is set to 0. Detection result confidence of person existence corresponding to the three sensing devices is set to 1.

Detection result confidence of person nonexistence of each sensing device shown in FIG. 6 is used as an example. When the integrated sensing platform determines a human body existence detection result of the bedroom 2, if none of the three sensing devices detects existence of a person, for example, the router 3 and the smart bed report a detection result of "person nonexistence" (the millimeter wave radar 2 does not report detection information due to a fault or the like), because the detection result confidence of person nonexistence corresponding to the smart bed is 0, the detection result may be directly ignored. In addition, because the detection result confidence of person nonexistence of the router 3 is 0.6, which is greater than or equal to a specified threshold 0.6, the integrated sensing platform may determine that no person exists in the bedroom 2 and confidence of the detection result is 0.6.

Optionally, after determining a detection result of a subspace, the integrated sensing platform may provide the detection result and confidence of the detection result for a smart scenario application module, and the smart scenario application module may execute a corresponding scenario policy based on the detection result and the confidence of the detection result. For example, for a detection result of person nonexistence, different scenario control policies may be used based on different confidence corresponding to the detection result. For example, if the integrated sensing platform determines that no person exists in a room and confidence of the detection result is 0.8, which is greater than the specified threshold 0.6, the smart scenario application module controls a lighting subsystem in the room to perform a light turn-off operation. If the integrated sensing platform determines that no person exists in a room and confidence of the detection result is 0.6, which is not greater than the specified threshold 0.6, the smart scenario application module provides a voice prompt by using a smart speaker or uses another manner (for example, sends information to a corresponding mobile phone based on a preset mobile phone number) to ask a user whether to turn off a light in the room, and may control, based on a selection of the user, a lighting subsystem in the room to perform a corresponding operation.

The third detection mode is also referred to as a multi-device detection algorithm based on a context relationship. In a case, the integrated sensing platform determines, based on the topology information of the device and the space from the sensing database layer, that one or more sensing devices are disposed in a subspace (for example, a room), but the one or more sensing devices cannot cover an entire detection area in the subspace. Consequently, detectable detection areas in the subspace are discontinuous, or a detectable detection area in the subspace and a detection area in another surrounding subspace are discontinuous. That is, the detection area in the subspace is not fully covered by the one or more sensing devices disposed in the subspace. In this case, the integrated sensing platform may determine that a detection mode corresponding to the subspace is the third detection mode. In another case, the integrated sensing platform determines, based on the topology information of the device and the space from the sensing database layer, that no sensing device is disposed in a subspace (for example, a room). **In** this case, a detection area in the subspace is not covered by any sensing device. **In** this case, the integrated sensing platform may determine that a detection mode corresponding to the subspace is the third detection mode.

Using human body existence detection as an example, the third detection mode is mainly applied to a case in which discontinuous coverage areas exist in a space of a whole house. **In** this case, when a human body existence detection result of a subspace (house) in which discontinuous coverage areas exist is to be determined, a current human body existence detection result of the subspace (room) in which discontinuous coverage areas exist may be obtained through inference based on a historical detection result (that is, a spatial-temporal context) of another subspace that has a communication relationship with the subspace.

**In** an implementation of determining a human body existence detection result of the first subspace by using the third detection mode, no sensing device is disposed in the first subspace, and the integrated sensing platform determines that a detection mode corresponding to the first subspace is the third detection mode, and determines a second subspace that communicates with the first subspace (there may be one or more second subspaces). Optionally, the integrated sensing platform may determine, based on a layout (for example, an electronic map of a whole house or a floor plan of a whole house) of subspaces, the second subspace that communicates with the first subspace, or may determine, based on communication relationship information in the sensing database stored at the database layer, the second subspace that communicates with the first subspace. The integrated sensing platform obtains sensing information of a sensing device in the second subspace and historical data (the historical data is a spatial-temporal context of the second subspace) of a human body sensing detection result of the second subspace based on the third detection mode corresponding to the first subspace, and then determines, based on the sensing information of the sensing device in the second subspace, the historical data of the human body sensing detection result of the second subspace, and a communication relationship between the first subspace and the second subspace, whether a person exists in the first subspace.

**In** another implementation of determining a human body existence detection result of the first subspace by using the third detection mode, one or more sensing devices are disposed in the first subspace, and the integrated sensing platform determines that a detection mode corresponding to the first subspace is the third detection mode, and determines a second subspace that communicates with the first subspace (there may be one or more second subspaces). A manner of determining the second subspace is as described above. The integrated sensing platform obtains sensing information of the one or more sensing devices in the first subspace, sensing information of a sensing device in the second subspace, and historical data (the historical data is a spatial-temporal context of the second subspace) of a human body sensing detection result of the second subspace based on the third detection mode corresponding to the first subspace, and then determines, based on the sensing information of the one or more sensing devices in the first subspace, the sensing information of the sensing device in the second subspace, the historical data of the human body sensing detection result of the second subspace, and a communication relationship between the first subspace and the second subspace, whether a person exists in the first subspace.

A bathroom 2 in FIG. 3 is used as an example. No sensing device is disposed in the bathroom 2, a detection mode corresponding to the bathroom 2 is the third detection mode, and the bathroom 2 communicates with the bedroom 2 and the balcony 2. A process in which the integrated sensing platform determines a human body existence detection result of the bathroom 2 at a current moment t may include: obtaining sensing information of a sensing device on the balcony 2 at the moment t, and determining a detection result of the balcony 2 at the moment t based on the sensing information (certainly, the detection result of the balcony 2 at the moment t may alternatively be directly obtained); obtaining sensing information of a sensing device in the bedroom 2 at the moment t, and determining a detection result of the bedroom 2 at the moment t based on the sensing information (certainly, the detection result of the bedroom 2 at the moment t may alternatively be directly obtained); obtaining detection results of the balcony 2, the bedroom 2, and the bathroom 2 at a moment t-1 (the moment t-1 is before the moment t); and obtaining detection results of the balcony 2, the bedroom 2, and the bathroom 2 at a moment t-2 (the moment t-2 is before the moment t-1). By analogy, more historical data of the balcony 2, the bedroom 2, and the bathroom 2 may be obtained. Then, the integrated sensing platform may determine the detection result of the bathroom 2 at the moment t based on the obtained data and with reference to a communication relationship between the bathroom 2, the bedroom 2, and the balcony 2.

For example, at the moment t-2, a person exists on the balcony 2, no person exists in the bedroom 2, and no person exists in the bathroom 2. At the moment t-1, no person exists on the balcony 2, a person exists in the bedroom 2, and no person exists in the bathroom 2. At the moment t, no person exists on the balcony 2, and no person exists in the bedroom 2. Based on the foregoing historical data, the following inference can be performed: From the moment t-2 to the moment t-1, a person moves from the balcony 2 to the bedroom 2; the bedroom 2 is in a state of no person at the moment t, and a communication area formed by the balcony 2, the bathroom 2, and the bedroom 2 only has a door of the bedroom 2 as a unique exit; and therefore, if the person leaves the bedroom 2 from the moment t-1 to the moment t, existence of a person in the bedroom 2 should be detected at the moment t (because a time interval between the moment t-1 and the moment t is relatively small, there is no missed detection). However, based on the foregoing historical data, no person exists in the bedroom 2 and the balcony 2 at the moment t. Based on the foregoing inference, the person does not leave the communication area. Therefore, it may be determined that the person enters the bathroom 2, and the integrated sensing platform determines that the detection result of the bathroom 2 at the moment t is "a person exists".

In an actual home application scenario, coverage of a sensor is generally discontinuous, and there is an area (that is, a non-sensing range) that cannot be covered by the sensor. Once a user is in the non-sensing range, if determining depends only on sensing information of a single sensor, a misjudgment may be caused. For example, for a bathroom area between a bedroom and a living room, if the user does not install a human body existence sensor, when the user takes a shower or uses a toilet in a bathroom for a long time, a misjudgment is made on a human body existence detection result of the bathroom. However, the third detection mode provided in this embodiment of this application is used to perform human body existence detection, so that a misjudgment may be reduced or avoided, and a human body sensing capability may be improved.

According to the foregoing integrated sensing platform in this embodiment of this application, sensing devices in a whole-house intelligence technology are no longer isolated from each other, and accuracy of a human body existence detection result of a room may be improved through spatial modeling and different detection modes.

In a possible implementation, the sensing inference layer of the integrated sensing platform may further determine a human body sensing detection result of an entire space (a whole house) based on a human body sensing detection result of each subspace (room). Human body existence detection is used as an example. If a detection result of any room in the whole house is that a person exists, a detection result determined by the integrated sensing platform for the whole house is that a person exists. If detection results of all rooms in the whole house are that no person exists, a detection result determined by the integrated sensing platform for the whole house is that no person exists.

The integrated sensing platform integrates sensing information of all sensing devices in the house to implement space-centric human body sensing detection. In one aspect, whole-house intelligence strongly depends on the human body sensing capability, for example, intelligent control of each subsystem in FIG. 1 strongly depends on sensing of a user status and behavior in the whole house. For example, in many smart scenarios, a spatial position and some behavior information of a user need to be known. According to the foregoing embodiment of this application, the human body sensing capability may be improved, thereby ensuring precise control of each subsystem. In another aspect, sensing data in the whole-house intelligence is diversified, for example, the sensing data relates to detection data of a plurality of sensors, device information, and operation information of the user. According to the foregoing embodiment of this application, the integrated sensing platform may be established to uniformly perform processing, distribution, decision making, and inference on the sensing data. In still another aspect, the subsystems in the whole-house intelligence have a relatively high requirement for uniformity of a whole-house detection result. According to the foregoing embodiment of this application, the detection result may be provided for each subsystem for use, and each subsystem does not need to perform independent analysis to obtain the detection result, so that a risk of a conflict caused by inconsistent detection results of the subsystems may be avoided, and system resource overheads may be further reduced.

It may be understood that FIG. 2 shows only an example of the software system architecture of the integrated sensing platform. A structure of a software system of the integrated sensing platform is not limited in this embodiment of this application.

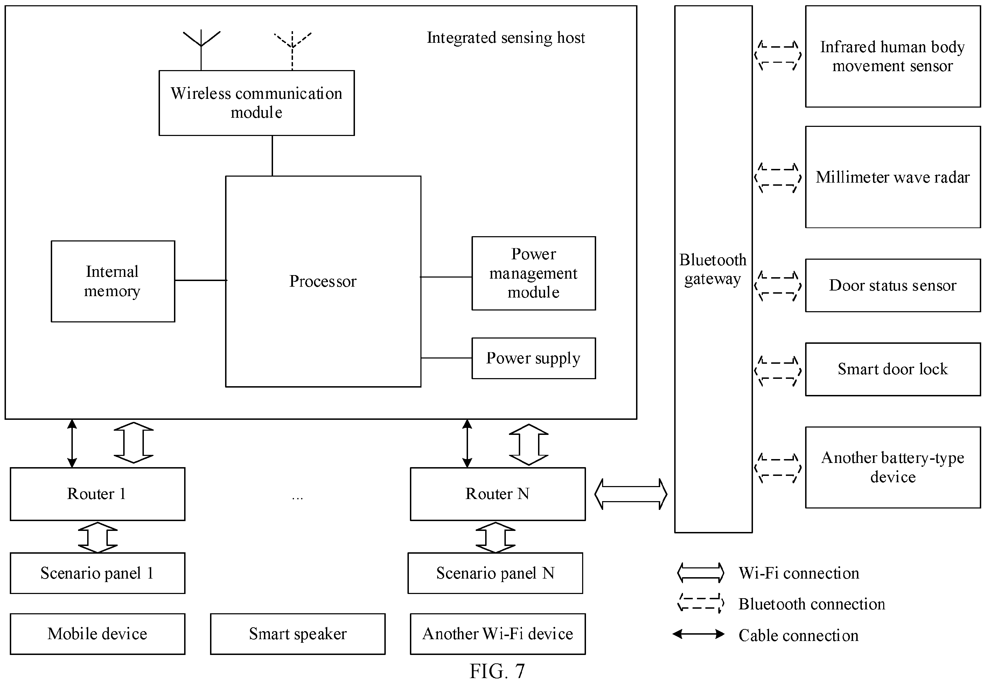

FIG. 7 is a diagram of a hardware system architecture of an integrated sensing platform according to an embodiment of this application.

As shown in FIG. 7, a hardware presentation form of the integrated sensing platform may be an integrated sensing host. The integrated sensing host may include one or more processors (in FIG. 7, one processor is used as an example for description). The processor may be configured to process functions such as algorithm calculation and service logic. **In** this embodiment of this application, the processor may perform the detection method provided in embodiments of this application, to determine a human body sensing detection result of a subspace or a space in which the subspace is located.

Further, the integrated sensing host may further include an internal memory coupled to the processor. The internal memory may store one or more programs, and the program may be executed by the processor, to implement the detection method provided in embodiments of this application. The internal memory may further store data (for example, sensing information of a sensing device) required for performing the foregoing detection method, and may further store intermediate data generated in a process of performing the foregoing detection method.

Further, the integrated sensing host may further include a wireless communication module, and the wireless communication module is coupled to the processor. The wireless communication module may provide wireless communication functions such as a wireless local area network (wireless local area network, WLAN), a Wi-Fi network, and Bluetooth. The wireless communication module may be one or more components integrating at least one communication processing module. The wireless communication module may alternatively be replaced with a wired communication module such as power line communication (power line communication, PLC).

Further, the integrated sensing host may further include a power management module and a power supply, to provide electric energy for a power-consuming component in the integrated sensing host.

The integrated sensing host may be connected to one or more sensing devices such as sensors. For example, the integrated sensing host may be connected to an infrared human body movement sensor, a millimeter wave radar, a door status sensor, a smart door lock, and another battery-type device by using a Bluetooth gateway. The integrated sensing host may be further connected to one or more routers by using a network cable or Wi-Fi. A scenario panel, a smart speaker, a mobile device (for example, a smartphone, a smart watch, or a mobile office device), and another Wi-Fi device may be connected to the integrated sensing host by using the router.

The integrated sensing host may collect detection data reported by devices such as the infrared human body movement sensor and the millimeter wave radar, operation information reported by a smart device, and link and traffic information of the mobile device reported by the router, and use the collected information as input data of the detection method. The processor of the integrated sensing host runs the detection method provided in embodiments of this application to determine a detection result of a sub-space (for example, a room) level, and may further determine a detection result of a space (for example, a whole house) level.

It may be understood that a naming manner of the integrated sensing host is not limited in this embodiment of this application. The integrated sensing host may be an independent hardware device, or may be combined with another hardware device.

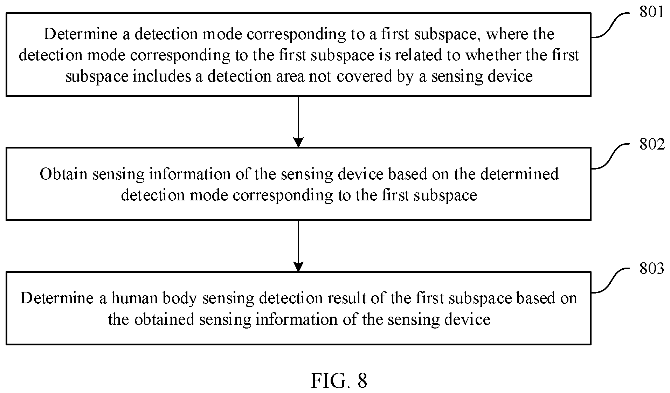

FIG. 8 is a schematic flowchart of a detection method according to an embodiment of this application. The process may be executed by the integrated sensing platform provided in embodiments of this application.

The following uses determining a human body sensing detection result of a first subspace as an example for description. The human body sensing detection may include human body existence detection, that is, detecting whether a person exists in a subspace or a space (for example, a detection result is that a person exists, or a detection result is that no person exists). The human body sensing detection may alternatively include other detection, for example, detection on user behavior or a user status. This is not limited in this embodiment of this application.

As shown in FIG. 8, the process may include the following steps.

Step 801: Determine a detection mode corresponding to the first subspace, where the detection mode corresponding to the first subspace is related to whether the first subspace includes a detection area not covered by a sensing device.

A detection mode corresponding to a subspace may be one of a first detection mode, a second detection mode, and a third detection mode. Optionally, if the first subspace includes one sensing device, and a detection area in the first subspace is fully covered by the sensing device, the detection mode corresponding to the first subspace is the first detection mode. If the first subspace includes a plurality of sensing devices, and a detection area in the first subspace is fully covered by the plurality of sensing devices, the detection mode corresponding to the first subspace is the second detection mode. If the first subspace does not include a sensing device, or the first subspace includes one or more sensing devices, and a detection area in the first subspace is not fully covered by the one or more sensing devices, the detection mode corresponding to the first subspace is the third detection mode.

For descriptions of the foregoing detection modes, refer to the foregoing related content. Details are not described herein again.

In a possible implementation, the integrated sensing platform may preset a detection mode corresponding to each subspace. In step 801, the integrated sensing platform may obtain a preset detection mode corresponding to the first subspace. In another possible implementation, when human body sensing detection needs to be performed on the first subspace, the integrated sensing platform may determine, based on topology information of a device and a space, the detection mode corresponding to the first subspace.

Step 802: Obtain sensing information of the sensing device based on the determined detection mode corresponding to the first subspace.

Data required for determining a detection result varies according to different detection modes. Through this step, data required by the detection mode may be obtained based on the detection mode corresponding to the first subspace.

Optionally, if the detection mode corresponding to the first subspace is the first detection mode, sensing information of a sensing device (the sensing device is a unique sensing device disposed in the first subspace) in the first subspace may be obtained.

Optionally, if the detection mode corresponding to the first subspace is the second detection mode, sensing information of a plurality of sensing devices in the first subspace may be obtained.

Optionally, if the detection mode corresponding to the first subspace is the third detection mode, and no sensing device is disposed in the first subspace, sensing information of a sensing device in a second subspace and historical data of a human body sensing detection result of the second subspace may be obtained. If the detection mode corresponding to the first subspace is the third detection mode, and one or more sensing devices are disposed in the first subspace, sensing information of the one or more sensing devices in the first subspace, sensing information of a sensing device in a second subspace, and historical data of human body sensing detection results of the first subspace and the second subspace may be obtained. The second subspace includes one or more subspaces that communicate with the first subspace.

For a specific implementation of step 802, refer to the foregoing related content. Details are not described herein again.

Step 803: Determine the human body sensing detection result of the first subspace based on the obtained sensing information of the sensing device.

Algorithm logic for determining a human body sensing detection result varies according to different detection modes.

Optionally, if the detection mode corresponding to the first subspace is the first detection mode, a detection result of the sensing device in the first subspace may be determined as the human body sensing detection result of the first subspace.

Optionally, if the detection mode corresponding to the first subspace is the second detection mode, and it is determined, based on sensing information of any one of the plurality of sensing devices in the first subspace, that a person exists, it is determined that a person exists in the first subspace. If none of the plurality of sensing devices in the first subspace senses existence of a person, it is determined, based on sensing information of each sensing device and detection result confidence of person nonexistence corresponding to each sensing device, whether no person exists in the first subspace.

Optionally, if the detection mode corresponding to the first subspace is the third detection mode, and there is no sensing device in the first subspace, it is determined, based on the sensing information of the sensing device in the second subspace, the historical data of the human body sensing detection result of the second subspace, and a communication relationship between the first subspace and the second subspace, whether a person exists in the first subspace.

Optionally, if the detection mode corresponding to the first subspace is the third detection mode, and there are one or more sensing devices in the first subspace, it is determined, based on the sensing information of the sensing devices in the first subspace and the second subspace, the historical data of the human body sensing detection results of the first subspace and the second subspace, and a communication relationship between the first subspace and the second subspace, whether a person exists in the first subspace.

For a specific implementation of step 803, refer to the foregoing related content. Details are not described herein again.

A detection result of each subspace may be determined in the foregoing manner. Further, a detection result of an entire space may be determined based on the detection result of each subspace. The detection result of the subspace and/or the detection result of the entire space may be used as a basis for enabling a smart scenario, or may be used as a basis for executing an intelligent control policy in the smart scenario.

The detection mode corresponding to the first subspace is related to whether the first subspace includes a detection area not covered by a sensing device. It may be understood that whether the first subspace includes a detection area not covered by a sensing device is related to installation information (for example, a quantity and a position) of a sensing device deployed in a space in which the first subspace is located and a layout of subspaces in the space, that is, the detection mode corresponding to the subspace may be set based on the installation information of the sensing device deployed in the space and the layout of the subspaces in the space. **In** this way, because coverage of sensing devices in different subspaces is different, different subspaces may correspond to different detection modes. Therefore, based on the foregoing difference between different subspaces, detection modes matching the subspaces may be used to perform human body sensing detection, thereby improving a human body sensing capability in the space.

**In** a possible implementation, after receiving a triggering event, the integrated sensing platform may start a sensing device in a whole house, and execute the foregoing detection process within subsequent specified duration, to determine a human body existence detection result of each room in the time period, and may further determine a human body existence detection result of the whole house.

Considering that only a position of an entrance door in a whole-house space is an exit of the whole-house space, a status change of the whole house from person existence to person nonexistence or a status change from person nonexistence to person existence may be triggered only after the entrance door is opened. **In** some embodiments of this application, a door opening event and/or a door closing event may be used as the foregoing triggering event, to trigger execution of the foregoing detection process. For example, after detecting a door opening event or a door closing event, a smart door lock or a door status sensor may report the event to the integrated sensing platform, so that the integrated sensing platform and an integrated sensing host may perform the foregoing detection method within specified duration (for example, within half an hour) after the event occurs, to obtain human body existence detection results of each room and the whole house.

**In** a possible implementation, Wi-Fi scanning information (that is, wireless local area network scanning information) of a mobile device (for example, a smartphone) of a family member may be used as one of bases for determining a human body existence detection result of a subspace (room). For example, a commonly used mobile phone number of a family member may be bound to a whole-house intelligence system. An application in a mobile phone invokes a Wi-Fi scanning service provided by a system of the mobile phone, and sends a scanning result to the integrated sensing platform, so that the integrated sensing platform and the integrated sensing host determine, based on the information, whether a home Wi-Fi signal exists near the mobile phone, thereby assisting in determining whether a user is at home.

**In** a possible implementation, within specified duration after a sensing device in a space is started based on a triggering event (for example, a door closing event), if it is determined, based on sensing information of the sensing device in the space, that no person exists in the space, historical data of a human body sensing detection result of each subspace in the space and wireless local area network scanning information (for example, Wi-Fi scanning information) reported by a mobile device associated with the space may be obtained, and it may be determined, based on the historical data and the wireless local area network scanning information, whether a person exists in the space.

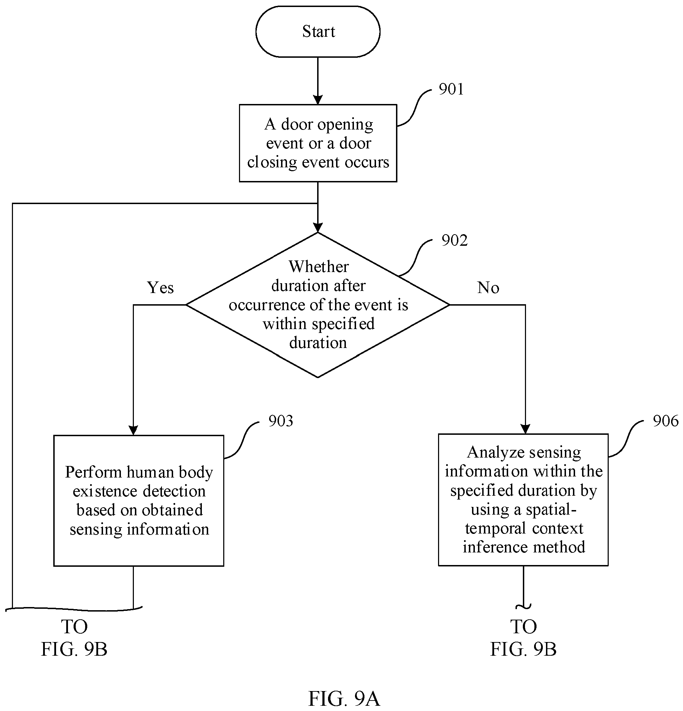

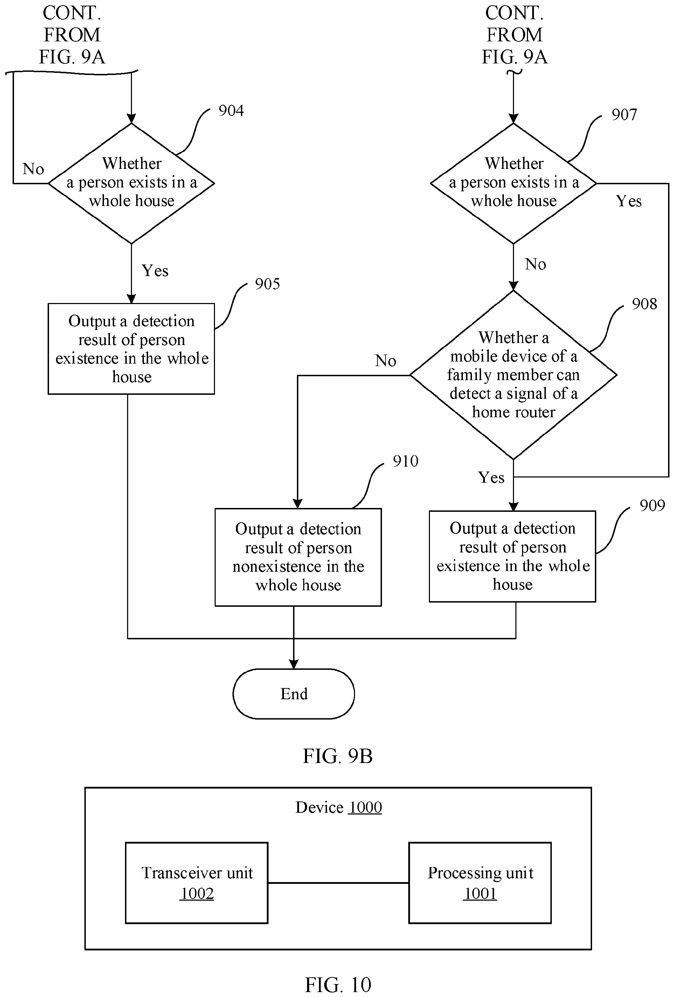

FIG. 9A and FIG. 9B show an example of a schematic flowchart of triggering, based on a door opening event and a door closing event, execution of the foregoing detection method. As shown in FIG. 9A and FIG. 9B, the process may include the following steps.

Step 901: An integrated sensing platform determines that a door opening event or a door closing event occurs.

In this step, a smart door lock or a door status sensor may report the door opening event or the door closing event to the integrated sensing platform.

Step 902: The integrated sensing platform determines whether duration after occurrence of the door opening event or the door closing event is within specified duration; and if the duration is within the specified duration, proceeds to step 903; or if the duration is not within the specified duration, proceeds to step 906.

Step 903: The integrated sensing platform obtains sensing information of a sensing device in a whole house, performs human body existence detection based on the obtained sensing information to determine whether a person exists in each room, determines, based on a detection result of each room, whether a person exists in the whole house, and then proceeds to step 904. For a specific detection method, refer to the foregoing embodiment.

Step 904: If it is detected that no person exists in the whole house, proceed to step 902; or if it is detected that a person exists in the whole house, proceed to step 905.

Step 905: The integrated sensing platform outputs a detection result of person existence in the whole house, so that a subsystem (for example, a security protection subsystem) in a smart scenario performs corresponding control based on the detection result.

Step 906: If existence of no person is detected within the specified duration, analyze sensing information within the specified duration by using a spatial-temporal context inference method, to determine whether a person exists in the whole house. For example, it may be determined, based on historical data of a detection result of each room in the whole house and with reference to currently received sensing information, whether a person exists in the whole house.

Step 907: If no person exists in the whole house, proceed to step 908; or if a person exists in the whole house, proceed to step 909.

Step 908: The integrated sensing platform indicates, based on a bound number of a mobile device (for example, a smartphone), a corresponding mobile device to report Wi-Fi scanning information, and determines, based on the received Wi-Fi scanning information, whether the Wi-Fi scanning information includes a Wi-Fi signal of a home router, that is, determines whether a mobile device of a family member can receive a signal of the home router; and if the mobile device of the family member can receive a signal of the home router, it indicates that a person exists in the whole house, and the integrated sensing platform proceeds to step 909; or if the mobile device of the family member cannot receive a signal of the home router, the integrated sensing platform proceeds to step 910.

Step 909: The integrated sensing platform outputs a detection result of person existence in the whole house, so that a subsystem (for example, a security protection subsystem) in a smart scenario performs corresponding control based on the detection result.

Step 910: The integrated sensing platform outputs a detection result of person nonexistence in the whole house, so that a subsystem (for example, a security protection subsystem) in a smart scenario performs corresponding control based on the detection result.

In the foregoing process, the sensing information of the sensing device and the Wi-Fi scanning information of the mobile device are combined to perform whole-house human body existence detection, thereby expanding an application scenario of the system, and reducing an overall risk of a misjudgment. This has obvious advantages in some typical application scenarios. For example, no human body existence sensor is installed in a kitchen. When a user is cooking in the kitchen and another user opens a door and leaves the room, the foregoing process is used to perform whole-house human body existence detection. It may be detected that Wi-Fi scanning information of a mobile phone of the user in the kitchen includes a Wi-Fi signal of a whole-house router, and sensing information of a smart device (for example, a smoke exhaust ventilator or a water heater) in the kitchen may be further detected. Therefore, a misjudgment that no person exists in the whole house may be avoided, thereby improving detection accuracy.

Considering that a sensing device (for example, a sensor) may have a false report rate to some extent, in some embodiments of this application, when the integrated sensing platform does not receive a door opening event, switching of a human body existence status (that is, a human body existence detection result) of the whole house may be limited. The human body existence status of the whole house is switched to person existence only when a sensing device continuously senses existence of a person. Otherwise, the human body existence status of the whole house remains unchanged, thereby improving detection accuracy.

The following describes, by using several examples, several implementations of applying the detection method provided in embodiments of this application to smart scenario control.

Example 1: A human body existence detection result based on integrated sensing is applied to a smart energy saving scenario.

In application scenarios of whole-house intelligence, energy saving and emission reduction are important application directions. Smart home products play a role in energy saving in many aspects. For example, a smart lighting subsystem can automatically adjust brightness of a lamp to minimize energy consumption when ensuring indoor brightness. In spaces such as a washroom and a storage room, a light may be turned on when a person arrives, and the light may be turned off when the person leaves. In this way, on the one hand, this may facilitate daily life of a user, and on the other hand, this may avoid waste caused by the user forgetting to turn off a light or a device in a timely manner. To meet the foregoing energy saving requirement, the integrated sensing-based detection method provided in embodiments of this application may be used to detect an activity situation of a family member in a room or a whole house, to automatically turn off a device in a corresponding space or control a device in a corresponding space to enter an energy saving mode, when no person exists in the whole house or the room.

For example, a home appliance (bathroom) subsystem may turn off a water heater in a bathroom based on a detection result of person nonexistence in the whole house that is output by the integrated sensing platform, the lighting subsystem may turn off lights in all rooms based on the detection result of person nonexistence in the whole house that is output by the integrated sensing platform, a cooling and heating fresh air subsystem may turn off a central air conditioner in the whole house based on the detection result of person nonexistence in the whole house that is output by the integrated sensing platform, and an entertainment subsystem may turn off a smart screen based on the detection result of person nonexistence in the whole house that is output by the integrated sensing platform.

Because the integrated sensing platform in embodiments of this application may provide a human body existence detection result for each subsystem in the whole-house intelligence, a problem of inconsistent detection results caused by the subsystems performing human body existence detection may be avoided. On the other hand, according to the detection method provided in embodiments of this application, sensing information of sensing devices in the whole house may be integrated. Therefore, a misjudgment rate of whether a person exists in the room or the whole house may be reduced, thereby helping each subsystem perform energy saving control.

Example 2: A human body existence detection result based on integrated sensing is applied to a smart security protection scenario.

Home security protection plays a very important role in ensuring family property and personal safety. With rapid development of the smart home field, security protection also becomes an important application direction of whole-house intelligence. The integrated sensing-based detection method provided in embodiments of this application may be used to detect whether a person exists in a room or a whole house, so that a security protection subsystem performs corresponding processing.

For example, the security protection subsystem may enable a security protection mode for the whole house based on a detection result of person nonexistence in the whole house that is output by the integrated sensing platform. When the whole house is in the security protection mode, if the integrated sensing platform detects that a person exists and there is no normal door lock opening record, the security protection subsystem may determine that a person intrudes, and the security protection subsystem may further send reminder information to a corresponding mobile phone of a user based on a bound mobile phone number.

According to the detection method provided in embodiments of this application, sensing information of sensing devices in the whole house may be integrated. Therefore, a possibility of a misjudgment caused by a fault of an individual sensor may be reduced, and a false alarm rate of the security protection subsystem may be reduced. On the other hand, the security protection subsystem performs control based on a human body existence detection result provided by the integrated sensing platform in embodiments of this application, thereby reducing or avoiding a security risk caused because the user forgets to enable an "away from home mode" by using a button of a smart door lock to perform an operation or by operating a smartphone when leaving home, if the security protection subsystem is triggered to enable the security protection mode only by manually enabling the "away from home mode" by the user.

Example 3: A human body existence detection result based on integrated sensing is applied to a collaborative wakeup scenario of smart devices.

With rapid development of smart homes, a space sensing capability of a smart device becomes an important direction of future development of smart homes. As an important entry device of a smart home, a smart speaker can respond to a voice instruction of a user. If a plurality of smart speakers are deployed at home, when the user wakes up a smart speaker by using a voice, a plurality of smart speakers in a plurality of rooms may be woken up at the same time. Therefore, how to ensure that only a smart speaker in a room in which a person exists responds to user wakeup is a function to be urgently optimized.

To resolve the foregoing problem, a related technology provides a collaborative wakeup method based on user voice receiving volume: Each awakened smart speaker may send detected user voice intensity information to a reference smart speaker (the reference smart speaker may be specified in advance), the reference smart speaker determines, based on the user voice intensity information from each awakened smart speaker, a smart speaker with greatest user voice intensity as a smart speaker configured to respond to the user voice, and the reference smart speaker sends a decision result to each of the foregoing smart speakers.

In the foregoing method, user voice volume information received by all smart speakers needs to be aggregated to one reference smart speaker for determining, and then a decision result is returned to each smart speaker after the determining. The foregoing process causes a relatively long delay in responding to user wakeup by the smart speaker. In addition, microphone sensors of the smart speakers have different sensitivity, and using the received voice volume as a determining basis may cause an inaccurate decision result.

To resolve the foregoing problem, an embodiment of this application provides the following solution: When a smart speaker is woken up, the awakened smart speaker may determine, based on a human body existence detection result provided by the integrated sensing platform in embodiments of this application, whether no person exists in a whole house. If no person exists in the whole house, the awakened smart speaker does not respond, to reduce false wakeup in a scenario of no person. If the awakened smart speaker determines, based on the human body existence detection result provided by the integrated sensing platform in embodiments of this application, that a person exists in the whole house, the awakened smart speaker may further obtain a detection result of whether a person exists in a room in which the smart speaker is located. If a person exists in the room in which the smart speaker is located, the smart speaker responds to the user voice; or if no person exists in the room in which the smart speaker is located, the smart speaker does not respond to the user voice.

In the foregoing solution provided in this embodiment of this application, the reference smart speaker does not need to be used to perform determining based on the user voice volume, so that a wakeup delay may be reduced, and a misjudgment caused by a microphone sensor sensitivity problem of the smart speakers may be further reduced.

Example 4: A human body existence detection result based on integrated sensing is applied to a smart notification scenario.

A smart doorbell may access a smart home of a user in a wireless connection manner such as Bluetooth or Wi-Fi. When a visitor triggers the smart doorbell, the smart doorbell may trigger a screen-equipped device (for example, a smart screen) or a smart speaker at home to send reminder information (for example, a reminder voice). Similarly, when an incoming call is made to a family, the screen-equipped device or the smart speaker at home is also triggered to send reminder information (for example, a reminder voice). In this case, how to select a proper device as a reminder device for the smart doorbell and the incoming call is an urgent problem to be resolved.

A currently used manner is as follows: When the smart doorbell calls in or an incoming call is made to the family, all screen-equipped devices and smart speakers at home respond at the same time, that is, all send a reminder voice, resulting in poor use experience.

To resolve the foregoing problem, an embodiment of this application provides the following solution: When the smart doorbell is triggered, or when an incoming call is made to the family, it may be determined, based on a human body existence detection result from the integrated sensing platform in embodiments of this application, whether a person exists in a whole house. If a person exists in the whole house, a room in which a person exists may be further determined based on the human body existence detection result. For the room in which a person exists, a screen-equipped device and/or a smart speaker in the room are/is indicated to send reminder information. Further, if it is determined that no person exists in the whole house, a message may be sent to a corresponding mobile device (for example, a mobile phone) or a phone number of the user may be dialed based on a bound number of a mobile device, to perform reminding.

According to the foregoing solution provided in this embodiment of this application, when the smart doorbell calls in or an incoming call is made to the family, only a device in a room in which a person exists may perform reminding, so that user experience may be improved.

Based on a same technical conception, an embodiment of this application further provides a device. The device may implement a function of the integrated sensing platform in embodiments of this application.

FIG. 10 is a diagram of a structure of a device 1000 according to an embodiment of this application. The device may include a processing unit 1001 and a transceiver unit 1002.

The transceiver unit 1002 is configured to obtain sensing information of a sensing device, where the sensing information of the sensing device is cached. The processing unit 1001 is configured to: obtain a detection mode corresponding to a first subspace, where the detection mode corresponding to the first subspace is related to whether the first subspace includes a detection area not covered by the sensing device; obtain the cached sensing information of the sensing device based on the detection mode corresponding to the first subspace; and determine a human body sensing detection result of the first subspace based on the sensing information of the sensing device. It should be understood that the processing unit 1001 may be specifically a processor, and the transceiver unit 1002 may be specifically a transceiver.

The foregoing device provided in this embodiment of this application can implement all method steps implemented by the integrated sensing platform in the foregoing method embodiments, and can achieve same technical effects. Parts and beneficial effects in this embodiment that are the same as those in the method embodiments are not specifically described herein again.

Based on a same conception as the foregoing method embodiments, an embodiment of this application further provides a readable storage medium. The readable storage medium stores a program instruction (or referred to as a program or an instruction). When the program instruction is executed by a processor, a device, a device, or a computer is enabled to perform the operation performed by the integrated sensing platform in any one of the foregoing method embodiments or the possible implementations of the foregoing method embodiments.

Based on a same conception as the foregoing method embodiments, this application further provides a program product, including a program instruction. When the program product is invoked and executed by a device or a computer, the device or the computer is enabled to implement the operation performed by the integrated sensing platform in any one of the foregoing method embodiments or the possible implementations of the foregoing method embodiments.

Based on a same conception as the foregoing method embodiments, this application further provides a chip or a chip system. The chip is coupled to a transceiver, and is configured to implement the operation performed by the integrated sensing platform in any one of the foregoing method embodiments or the possible implementations of the foregoing method embodiments. The chip system may include the chip and components such as a memory and a communication interface.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the program product according to this application. It should be understood that program instructions may be used to implement each process and/or each block in the flowcharts and/or the block diagrams and a combination of a process and/or a block in the flowcharts and/or the block diagrams. These program instructions may be provided for a general-purpose computer, a dedicated computer, an embedded processor, or a processor of another device, so that the computer or the processor of the another data processing device executes the program instructions to implement a specified function in one or more processes and/or one or more blocks.

These program instructions may alternatively be stored in a readable memory that can guide a computer or another device to work in a specific manner, so that the instructions stored in the readable memory implement a specified function in one or more processes and/or one or more blocks.

These program instructions may alternatively be loaded onto a computer or another device, so that a series of operation steps are performed on the computer or the another device, to generate corresponding processing. Therefore, the instructions executed on the computer or the another device provide steps for implementing a specified function in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of the claims of this application and their equivalent technologies.

## Claims

1. A detection method, comprising:
determining a detection mode corresponding to a first subspace, wherein the detection mode corresponding to the first subspace is related to whether the first subspace comprises a detection area not covered by a sensing device;
obtaining sensing information of the sensing device based on the determined detection mode corresponding to the first subspace; and
determining a human body sensing detection result of the first subspace based on the sensing information of the sensing device.

2. The method according to claim 1, wherein the human body sensing detection result of the first subspace is: a person exists in the first subspace, or no person exists in the first subspace.

3. The method according to claim 1 or 2, wherein the first subspace comprises one sensing device, a detection area in the first subspace is fully covered by the one sensing device, and the detection mode corresponding to the first subspace is a first detection mode; and
the obtaining sensing information of the sensing device based on the determined detection mode corresponding to the first subspace comprises:
obtaining sensing information of the one sensing device in the first subspace based on the determined first detection mode.

4. The method according to claim 1 or 2, wherein the first subspace comprises a plurality of sensing devices, a detection area in the first subspace is fully covered by the plurality of sensing devices, and the detection mode corresponding to the first subspace is a second detection mode; and
the obtaining sensing information of the sensing device based on the determined detection mode corresponding to the first subspace comprises:
obtaining sensing information of the plurality of sensing devices in the first subspace based on the determined second detection mode.

5. The method according to claim 4, wherein the determining a human body sensing detection result of the first subspace based on the sensing information of the sensing device comprises:
if it is determined, based on sensing information of any one of the plurality of sensing devices in the first subspace, that a person exists, determining that a person exists in the first subspace.

6. The method according to claim 4, wherein the determining a human body sensing detection result of the first subspace based on the sensing information of the sensing device comprises:
if none of the plurality of sensing devices in the first subspace senses existence of a person, determining, based on sensing information of each sensing device and detection result confidence of person nonexistence corresponding to each sensing device, whether no person exists in the first subspace.

7. The method according to claim 1 or 2, wherein the first subspace does not comprise a sensing device, and the detection mode corresponding to the first subspace is a third detection mode; and
the obtaining sensing information of the sensing device based on the determined detection mode corresponding to the first subspace comprises:
obtaining sensing information of a sensing device in a second subspace and historical data of a human body sensing detection result of the second subspace based on the determined third detection mode, wherein
the second subspace comprises one or more subspaces that communicate with the first subspace.

8. The method according to claim 7, wherein the determining a human body sensing detection result of the first subspace based on the sensing information of the sensing device comprises:
determining, based on the sensing information of the sensing device in the second subspace, the historical data of the human body sensing detection result of the second subspace, and a communication relationship between the first subspace and the second subspace, whether a person exists in the first subspace.

9. The method according to claim 1 or 2, wherein the first subspace comprises one or more sensing devices, a detection area in the first subspace is not fully covered by the one or more sensing devices, and the detection mode corresponding to the first subspace is a third detection mode; and
the obtaining sensing information of the sensing device based on the determined detection mode corresponding to the first subspace comprises:
obtaining sensing information of the one or more sensing devices in the first subspace, sensing information of a sensing device in a second subspace, and historical data of human body sensing detection results of the first subspace and the second subspace based on the determined third detection mode, wherein
the second subspace comprises one or more subspaces that communicate with the first subspace.

10. The method according to claim 9, wherein the determining a human body sensing detection result of the first subspace based on the sensing information of the sensing device comprises:
determining, based on the sensing information of the sensing devices in the first subspace and the second subspace, the historical data of the human body sensing detection results of the first subspace and the second subspace, and a communication relationship between the first subspace and the second subspace, whether a person exists in the first subspace.

11. The method according to any one of claims 1 to 10, wherein after the determining a human body sensing detection result of the first subspace based on the sensing information of the sensing device, the method further comprises:
determining a human body sensing detection result of a first space based on human body sensing detection results of at least two subspaces in the first space, wherein
the at least two subspaces in the first space comprise the first subspace.

12. The method according to claim 11, wherein the method further comprises:
when a triggering event is obtained, starting a sensing device in the first space.

13. The method according to claim 12, wherein the triggering event comprises at least one of a door opening event and a door closing event.

14. The method according to any one of claims 1 to 13, wherein before the determining a detection mode corresponding to a first subspace, the method further comprises:
setting, based on a layout of at least two subspaces in the first space and installation information of the sensing device in the first space, the detection mode corresponding to the first subspace, wherein the at least two subspaces in the first space comprise the first subspace; and
the determining a detection mode corresponding to a first subspace comprises:
obtaining the set detection mode corresponding to the first subspace.

15. A device, comprising one or more processors and one or more memories, wherein the one or more memories store one or more programs, and when the program is executed by the one or more processors, the device is enabled to perform the method according to any one of claims 1 to 14.

16. A chip system, wherein the chip system comprises a processor and a memory, and the processor is configured to read and execute a program stored in the memory, to implement the method according to any one of claims 1 to 14.

17. A readable storage medium, wherein the readable storage medium comprises a program, and when the program is run on a device, the device is enabled to perform the method according to any one of claims 1 to 14.

18. A program product, wherein when the program product is run on a device, the device is enabled to perform the method according to any one of claims 1 to 14.
